# EUROPEAN PATENT SPECIFICATION

(11) **EP 0 522 748 B1**
(45) Date of publication and mention of the grant of the patent: **25.03.1998**
(21) Application number: 92305811.9
(22) Date of filing: 24.06.1992
(51) Int. Cl.: H04J 3/06

(54) **SDH data transmission timing**
Zeitsteuerung der SDH-Datenübertragung
Réglage de l'horloge de données d'un système de transmission multiplex hiérarchisé synchrone

(30) Priority: 10.07.1991 GB 9114841
(43) Date of publication of application: 13.01.1993
(73) Proprietor: GPT LIMITED, Coventry, CV3 1HJ (GB)
(72) Inventor: Ferguson, Stephen Patrick, Coventry CV5 6PD (GB)
(74) Representative: Hoste, Colin Francis

(56) References cited:
- ICC 1988 ; 12. - 15. June 1988 ; Vol. 2 , pages 895 - 898 ; Philadelphia, US ; C.E. HOLBOROW et al. : 'SYNCHRONIZATION OF TRANSMISSION SYSTEMS '
- ICC 1990 ; 15.-19. April 1990 ; Vol. 2 , pages 381 - 390 ; ATLANTA, US ; H. KLINGER et al. : ' A 2.4 GBIT/S SYNCHRONOUS OPTICAL FIBER TRANSMISSION SYSTEM '
- IEEE COMMUNICATIONS MAGAZINE. vol. 27, no. 4, April 1989, NEW YORK, US pages 24 - 34 M. KIHARA 'Performance Aspects of Reference Clock Distribution for
- Evolving Digital Networks'

## Description

The present invention concerns digital data transmission systems and is particularly concerned with data transmission involving what is known as the synchronous digital hierarchy (SDH). SDH involves the multiplexing of lower rate signals into a hierarchy of higher rate signals which are all nominally synchronous.

A key requirement for SDH equipment is to offer compatibility with functions provided by the existing plesiochronous digital hierarchy (PDH) network. Accurate network timing is needed for some applications, where phase information is critical in the timing component of the delivered signal. Such timing is usually transported and delivered in existing networks, as a component of information within the primary rate traffic signal. Normally the primary rate traffic signal is at 2Mbit/s. For the purpose of this specification it will be assumed that the 2 Mbit/s signal is the primary rate signal. However this is not a factor in the actual basis of the present invention as in principle such timing can be transported and delivered at any frequency or can be derived from any constant digital bit rate, and then rescaled to the appropriate frequency for local use.

Where accurate network timing is lost the consequence is either a reduction of performance margins at some point in the network, leading to an increased risk of digital errors as normal parameter variation occurs, or else to errors being directly introduced - usually at a low rate of occurrence, but nontheless unacceptable for critical applications.

The delivery of accurate network timing is now widely accepted as being unavailable in SDH, at least in the way in which timing is transported in the PDH network, as a component of the 2Mbit/s signal carried across the network.

In SDH the 2 Mbit/s signal is transported in a virtual container (VC), whose location in time in relation to a frame timing reference, is defined by a pointer. Pointer adjustments in SDH produce phase disturbances in the timing component of the delivered 2 Mbit/s, which can cause problems in establishing network synchronisation, for example with exchange synchronisation arrangements. Good timing delivery is possible in principle over a point-point link, because pointers are not expected to change here, but in real networks it is necessary to allow for transmission via add-drop muxes, hubs, cross-connects etc. all of which may introduce changes in the values of pointers attached to VCs.

Discussions are continuing to establish accepted standards on ways to modify SDH in order to overcome this problem, but techniques proposed so far generally require that all nodes along an SDH path be equipped with conforming equipment, which effectively means that these techniques be approved as standards. Such solutions may be impractical because of the existence of significant quantities of equipment to the initial standard.

In the absence of such new techniques, the distribution of network timing over SDH networks is assumed to be via the SDH (usually optical) bearers, with dedicated clock outlets driven at primary rate - 2048 or 1544 kbit/s as appropriate for the territory - from the received bearer timing after rescaling from its transmission bit rate. Only one or two such outlets would normally be fitted per equipment, and they would be usable only by equipment which had been designed to accept timing via ports which are separate from data ports.

These outlets would be of no practical use in one of the most likely situations, where a customer is connected to an SDH element in the network, via a conventional 2 Mbit/s link over for example a copper pair, an optical fibre or a radio bearer. In these cases the provision of another 2 Mbit/s connection just for timing purposes would be uneconomic; in effect those customer services which require network-synchronous operation would suffer a severe cost penalty.

There is disclosed in ICC 1988; 12-15 June 1988, vol. 2, p.895-898, Philadelphia, US, HOLBOROW et al., Synchronization of Transmission Systems' a known SDH system of the type already discussed above.

According to the present invention an SDH data transmitter system having means to synchronise it to a primary rate clock and having rate translation means to translate the primary rate clock to a bearer rate, is characterised by having means to synchronise each successive piece of equipment in the network path and means to derive from the final bearer a timing signal back to the original primary clock rate and that there are means to cause the timing to be transmitted through the system at transport level and not at the VC level to maintain phase accuracy with the source.

According to the present invention a method of synchronising an SDH data transmission system in which the system is synchronised to a primary rate clock which is then translated to a bearer rate, the method being characterised by synchronising each successive piece of equipment in the network path and deriving from the final bearer a timing signal back to the original primary clock rate and causing the timing to be transmitted through the system at transport level and not at the VC level in order to maintain phase accuracy with the source.

How the invention made be carried out will now be described by way of example only and with reference to the accompanying drawings in which:
Figure 1 illustrates prior art PDH (Plesiochronous Digital Hierarchy) timing and prior art SDH timing; and
Figure 2 illustrates one embodiment of the present invention.

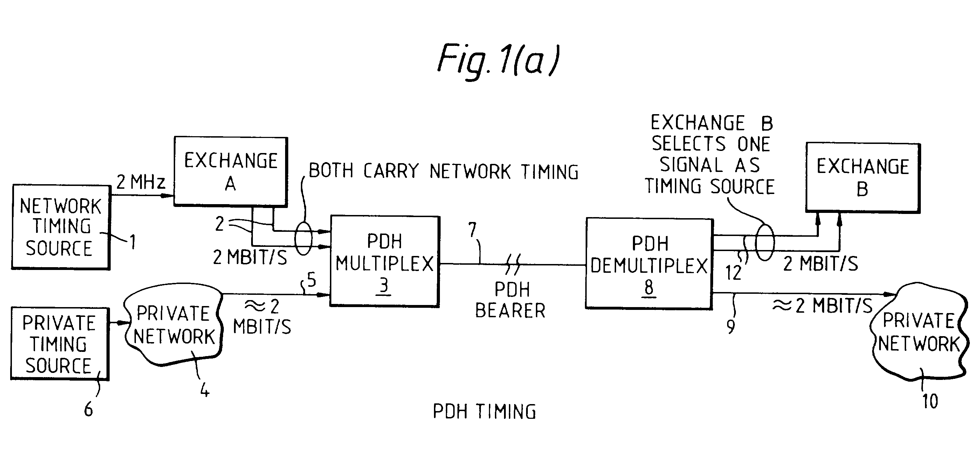

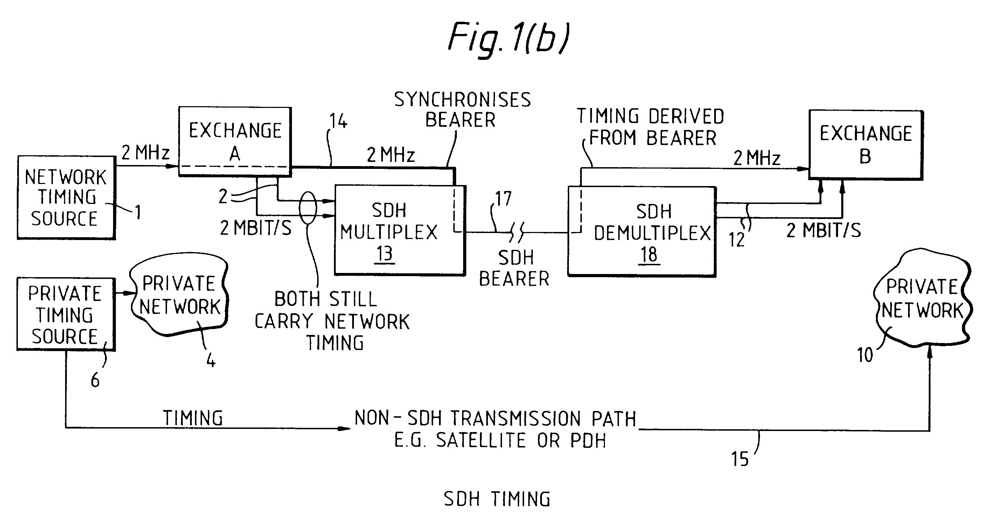

Prior to the proposed invention, the contrasting arrangements for timing transfer via SDH and via the existing PDH (plesiochronous digital hierarchy) are shown in principle in Figure 1 of the accompanying drawings to which reference is now made. Figure 1 (a) shows the PDH timing and Figure 1 (b) shows the SDH timing. Referring first to Figure 1 (a) network timing source 1 feeds a 2 MHz signal into an exchange A and two Wits of information are fed in parallel over two or more signal connections 2 to a PDH multiplex 3. This multiplex can also receive approximately 2 Mbits from a private network 4 over line 5 and this private network 4 is controlled from a private timing source 6.

The output from the PDH multiplex 3 is fed over line 7 in the form of a PDH bearer to a PDH multiplex 8. This has several outputs, one over line 9 which gives approximately 2 Mbits of information to a private network 10 and at the same time two or more outputs locked to the network timing source, each of which gives two Mbits of information to a further exchange B.

In Figure 1 (b) the parts of the figure which are common to Figure 1 (a) are shown with common references.

The PDH multiplex 3 of Figure 1 is replaced by a SDH multiplex 13 and the PDH multiplex 8 is replaced by an SDH multiplex 18. The line 17 connects 13 and 18 and carries the SDH bearer.

The exchange A is also connected to the SDH multiplex with a control line 14 which synchronises the bearer at 2 MHz. Signals from the private timing source 6 can be sent over a non-SDH transmission path 15 which may be for example the satellite or PDH to the private network 10. The line 14 in Figure 1 (b) may in practical implementation be removed by using the adjacent 2 Mbit/s lines 2 to carry network timing through the SDH multiplex 13 to the SDH bearer 17, without change to the SDH standards. The proposed invention allows removal of matching line 16 from the SDH demultiplex 18 to exchange B, again without change to the SDH standards.

The present invention is concerned with providing an alternative arrangement which delivers accurate timing from an SDH element via any 2Mbit/s signal, and which is entirely provided by that element, without the need for amendment to any other element in the SDH network. It could be applied under configuration control by the network operator, and need only be applied to those nominated 2 Mbit/s outputs which are intended to carry network timing.

It is suitable for delivering a single common component of network timing which has come over an SDH bearer, to one or a number of 2 Mbit/s users simultaneously.

It can best be understood by first considering the way in which SDH carries timing information via pointers. SDH transmission is based on integer multiples of 155.52 Mbit/s, with each transmitted signal being notionally divided into transport bytes and Payload bytes which are interspersed in a defined way. Transport bytes are organised in a regular structure with a Frame Alignment Word and other specific bytes allocated to management functions in blocks of bytes known collectively as the Section Overhead (SOH). The length of each frame is 125 microseconds, and every SDH signal or bearer is nominally synchronised to a master network clock. In the case of 155.52 Mbit/s each resulting frame has 2430 bytes or 19440 bits.

Payload bytes also have a regular structure, with their own "Path Overhead" (POH) bytes, which effectively define a frame within the Transport frame and have the same nominal frame rate. (These POH and SOH are a major advantage of SDH). The structure of the Payload bytes, including overheads, is known as a Virtual Container (VC). The VC frame may start at almost any of the bytes allocated to Payload in the overall signal, and relies entirely on information in the Transport frame for its start point to be found. This information is known as a "pointer", and is in the form of a digital word within the Transport SOH.

(Within a VC, there may be several smaller VC based on similar principles, and each of these has a further pointer, in a known place in the larger VC. This does not affect the significance of this invention but only the details of which bytes are to be used for pointer information).

The purpose of synchronisation across the SDH network is to allow the contents of different Transport frames to be exchanged in whole or in part. This requires that all VCs be generated from the same network timing, and SDH bearers are synchronised to the network as a means of distributing this timing to all parts of the network. This distribution can sometimes fail because of equipment faults, or can be disrupted momentarily by a variety of legitimate activities, but error-free transmission of VCs may still occur. In order to maximise the probability of error-free VC transmission during such disturbances, each VC is permitted to "float" within the aggregate stream of bytes such that the starting byte of the VC in the overall SDH signal can change from one successive frame to another. The number of times this can occur per second is bounded by standards.

Any change in the byte which starts a VC is necessarily associated with a change in the pointer value to allow the new start point to be found. The change involves a positive or negative alteration in the pointer value, and dedicated byte spaces in the overall bit stream are allocated to bridge the overflow or underflow which results, in order to prevent digital errors. Despite the resulting disturbances in the smooth flow of bytes, a reasonably smooth read out of the contents of the VC at its final destination is achieved by a subsequent brief change in the rate of the clock used there, compared with the nominal network clock rate, with this change process being controlled by the pointer information and smoothed by the use of a narrow-band phase locked loop.

In effect the justification process successfully transmits both data and mean frequency information, but somewhat distorts the phase information.

This process is identical in principle to "justification" used in the plesiochronous digital hierarchy (PDH) defined for example by CCITT in Recommendations G.742, G.751, and is not described in any further detail here.

Changes in pointer value, and the associated justification process, effectively introduces changes in network delay. The long term component of these adds to network wander, while the short term component is largely filtered out as jitter. It is the long term component or wander which is the main potential problem in maintaining network synchronisation and in operating exchanges, and is more severe than the result of the related justification process in the existing PDH. Problems may occur because when more than two exchanges are interconnected the additional wander may cause existing network allowances for wander to be exceeded, so that buffer stores may overflow, or alternatively the associated brief changes in clock rate at the VC destination may cause existing exchange equipment to change clock rate faster than it was designed to do, and in both cases errors may result.

The proposal according to the present invention takes advantage of the arrangements expected to be used for carrying network timing over SDH bearers, as already described. The principle assumed there is 2 Mbit/s timing is translated to the bearer rate multiplication or other means. The bearer rate is then carried through the network via a process of synchronising successive equipment in the path; this involves no pointer adjustments because it occurs always at the transport level, never at the VC level, and therefore reasonable phase accuracy with the source can be maintained. That source will normally be a 2 MHz clock provided by the network synchronisation system at a remote SDH element (usually a frequency of 2048 kHz will be used). Bearer timing is then rescaled back to the order of 2 MHz by digital division or other means at the terminating SDH element.

In the proposed embodiment, the 2 Mbit/s output from the terminating SDH element would be retimed from the rescaled version of the incoming SDH bearer rate, relying on the assumption that there is clock synchronism between the timing of the incoming SDH signal and that of the relevant 2 Mbit/s traffic carried within it. Where network arrangements are such that this assumption is known not to be true, then the 2 Mbit/s clock output rate from tributary ports would be commanded to be created in the usual way from pointer information, experiencing the known characteristic of phase disturbances in the process.

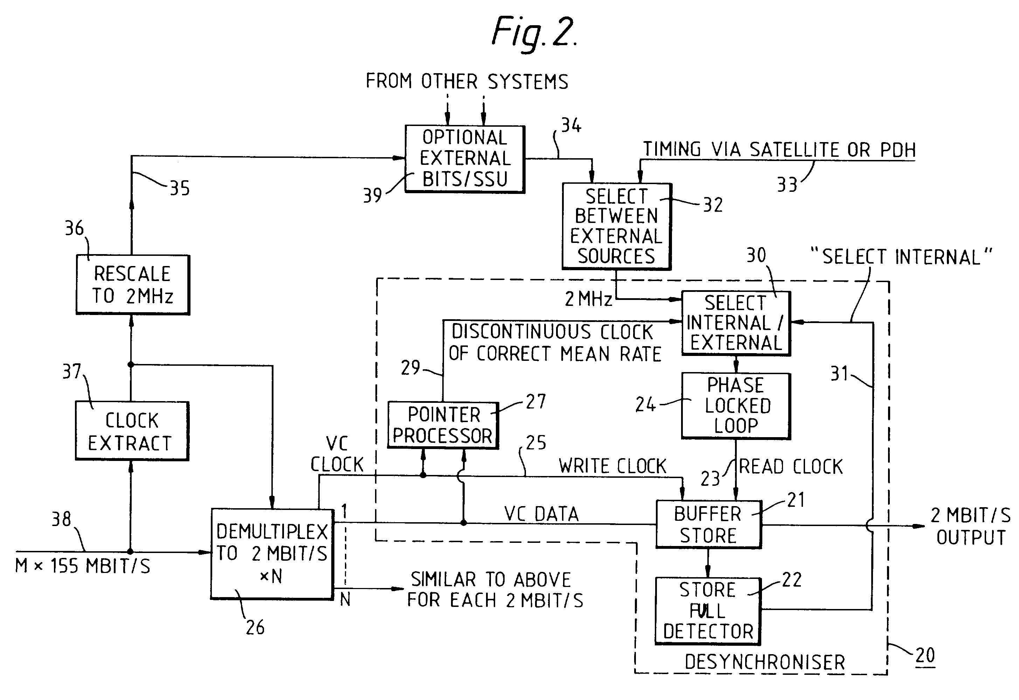

Figure 2 of the accompanying drawings to which reference is now made shows the essential components of an embodiment of the present invention by way of example only. A desynchroniser is shown in outline at 20 and this includes a buffer store 21 which passes information to a store full detector 22 and has two inputs, a read clock over line 23 where information is passed from a phase-lock loop 24 and an input over line 25 which is a write clock signal which is obtained from the V.C. clock of a demultiplexer unit 26 situated outside the desynchroniser 20. The V.C. clock signals are also sent to a pointer processor 27 and this has a further input of V.C. data over line 28 which is derived from one input of the demultiplexer 26. This V.C. data is also fed to the buffer store 21. The pointer processor feeds a discontinuous clock signal of the correct mean rate over line 29 to a select module 30 which can be sent to internal or external connections, in this embodiment it is set to select internally by a connection from the store filled detector 22 via line 31. The module 30 also has in this example a 2048 kHz input from a further select module 32 which selects between the external sources from either a timing path over line 33 which can come via a satellite or a PDH or over line 34 which receives a filtered clock from a BITS (building integrated timing system) - also known as an SSU (synchronisation supply unit)- clock supplier, module, which can derive its clock in turn from any of several sources which are controlled from other systems. The function of the BITS or SSU is to derive a highly secure clock signal from a choice of nominally equivalent alternative inputs, and to extend it in parallel to several equipments via multiple ports. At the same time it filters the clock to remove jitter, and provides a highly accurate internal standby clock in case all nominated inputs should fail. The optional external bits module 39 is fed with a signal over line 35 from a rescaling module 36 which is controlled by a clock 37 which also feeds into the demultiplexer 26. The demultiplexer and the clock extract are fed with M x 155 MHz/s over line 38.

When such synchronism does exist, positive and negative pointer adjustments would be known mutually to cancel over a period of time, allowing the operation of the receive pointer processor to be suppressed, on condition that a buffer of sufficient size was provided. This buffer is needed because wander can exist between the received bearer timing and the demultiplexed 2 Mbit/s traffic from 26, such wander being caused by an accumulation of separate pointer adjustments for each 2Mbit/s signal in each SDH element through which the traffic passes. A separate wander buffer is needed for each 2 Mbit/s signal which is to be configured as being network-synchronous, since each may have experienced a different path through the network.

The use of buffer store 21 to absorb wander is not in itself new. For example, satellite circuits use such stores to absorb the considerable wander which can result from movements in satellite position. What is new is the use of such a store in conjunction with the use of pointers, such that the arrangement of the following paragraphs can operate.

Conventionally, most data transmission requires an associated clock to be transmitted with the data, and provided that this clock is not used to time exchanges or networks or certain especially sensitive services, the standard of timing transmission which SDH provides in its payload is acceptable. Where a 2 Mbit/s signal arrives error-free, a good end-to-end path can be assumed to exist, and associated timing information will be passed correctly over that path, subject to possible short and medium term phase perturbations as discussed above. If this path continues error-free but synchronism between this and the SDH bearer which carries it should fail, then the SDH transmission network can be assumed to have a synchronisation fault. Data in the SDH payload, and the timing associated with that payload, will continue to pass over the SDH network but network timing itself will not, other than at the imperfect level within the SDH payload.

In some situations this condition may be detected by the SDH network, and Timing Markers are included in the SDH transmission overheads, which are to be used to immediately signal forward the fact that network timing is no longer available via the SDH bearers.

Whether or not the Timing Markers are used, if the assumed synchronism between 2Mbit/s and the bearer should fail, then the wander buffer 21 will eventually tend to overflow and the early detection of this condition by detector 22 can be used to revert temporarily to normal pointer operation so as to avoid data errors. In effect there would then be performed the normal pointer operations of a desynchroniser, but with the addition of a hysteresis range inside which no pointer value changes would cause action. This range would correspond in size to the range of pointer value changes which could be expected to be received in normal network operation and would typically be set to a value of two successive pointer adjustments in either direction. "Successive" in this connection refers to the closest succession permitted by the SDH standard, this being four frames or 500 microseconds. As long as a 2 Mbit/s signal continues to be error-free, then it can be assumed to contain valid timing information, imperfect though it may be after transmission via SDH. Once synchronisation via SDH has been lost, then the imperfect 2 Mbit/s signal remains as the only source of timing, where no alternative standby timing (such as in a BITS/SSU) is available. Therefore for 2 Mbit/s output ports configured to work in this way, each 2 Mbit/s signal at such an output would be arranged to remain as the timing standard for equipment receiving it, irrespective of any failure on the part of bearers to maintain network synchronism.

In some situations the incoming SDH bearer might not be used to retime the 2 Mbit/s output signal, and an alternative clock signal of similar network timing performance could be used. This would occur for example where multiple bearers (SDH or others) arrived at a node, and were connected to a Building Integrated Timing System (BITS - USA terminology) or to a Synchronisation Supply Unit (SSU - CCITT terminology).

Further examples of alternative timing for the 2 Mbit/s output signal would be:
a) the use of existing PDH transmission facilities such as a 2 Mbit/s path to deliver accurate timing to the demultiplex.
   This and the BITS/SSU arrangement are shown at the top of Figure 2.
b) a link via a geostationary satellite.

The alternatives (a) and (b) above would allow any number of end users to operate their own private networks with synchronisation independent of the possibly multiple SDH networks through which their traffic might pass between their own nodes. While this is a requirement which SDH could in the future be modified to meet, the proposed invention is intended to deliver a single network timing component via multiple non-SDH interfaces such as 2 Mbit/s.

## Claims

1. An SDH transmission system having means to synchronise it to a primary rate clock and having rate translation means to translate the primary rate clock to a bearer rate, characterised by having means to synchronise each successive piece of equipment in the network path and means (37, 36, 39, 32, 30, 24)to derive from the final bearer a timing signal back to the original primary clock rate and that there are means to cause the timing to be transmitted through the system at transport level and not at the Virtual Container (VC) level to maintain phase accuracy with the source.

2. A system according to Claim 1 in which there is means to provide clock synchronism between the timing of the SDH signal with that of the primary rate clock carried within it.

3. A system according to Claim 2 in which there are means whereby the output from the terminating SDH element is retimed from a rescaled version of the SDH bearer rate.

4. A system according to any preceding claim in which the bearer rate signal has a frequency in the order of 2 MHz.

5. A system as claimed in any preceding claim and including a wander buffer to accommodate wander caused by separate pointer adjustments made within various parts of the system through which the primary rate clock signal being processed passes.

6. A system according to Claim 5 and including a separate wander buffer for each signal being configured.

7. A system according to Claim 5 or 6 and including an overflow detection means to recognise any frequency out-of-limits condition in the wander buffer and to revert to normal pointer operation should an overflow occur.

8. A method of synchronising an SDH data transmission system in which the system is synchronised to a primary rate clock which is then translated to a bearer rate, the method being characterised by synchronising each successive piece of equipment in the network path and deriving from the final bearer a timing signal back to the original primary clock rate and causing the timing to be transmitted through the system at transport level and not at the Virtual Container (VC) level in order to maintain phase accuracy with the source.

9. A method as claimed in Claim 8 in which there is clock synchronism between the timing of the SDH signal with that of the primary rate clock carried within it.

10. A method as claimed in Claim 9 in which the output from the terminating SDH element is retimed from a rescaled version of the SDH bearer rate.

11. A method according to any one of Claims 8 to 10 and arranged to operate at a frequency in the order of 2 MHz.

12. A method as claimed in any one of Claims 8 to 11 comprising providing a wander buffer to accommodate wander caused by pointer adjustments made within various parts of the system through which the primary rate clock signal being processed passes.

13. A method as claimed in Claim 12 in which separate wander buffers for each signal being configured are provided.

14. A method as claimed in either Claim 12 or 13 comprising providing an overflow detection means to recognise any frequency out-of-limits condition in the wander buffer and to revert to normal pointer operation should an overflow occur.

## Patentansprüche

1. SDH Übertragungssystem, das Einrichtungen hat, um es auf einem primären Ratentakt zu synchronisieren und welches Ratenübersetzungseinrichtungen hat, um den primären Ratentakt auf eine Trägerrate zu übersetzen,
**gekennzeichnet durch**
das Beinhalten von Einrichtungen, um jedes nachfolgende Gerätestück auf dem Netzwerkweg zu synchronisieren und von Einrichtungen (37, 36, 39, 32, 30, 24), um von dem Endträger ein Zeitsteuerungssignal zurück zu der ursprünglichen primären Taktfolge abzuleiten, und darin, daß es Einrichtungen gibt, um die Zeitsteuerung dazu zu veranlassen, durch das System auf Transportniveau und nicht auf dem virtuellen Behälter-(VC)-Niveau gesendet zu werden, um die Phasengenauigkeit mit der Quelle aufrechtzuerhalten.

2. System nach Anspruch 1, in welchem es Einrichtungen zum Liefern der Taktsynchronisation zwischen der Zeitsteuerung des SDH Signales mit der des primären Ratentaktes, der darin getragen wird, gibt.

3. System nach Anspruch 2, in welchem es Einrichtungen gibt, wodurch der Ausgang von dem abschließenden SDH Element von einer wiederskalierten Version der SDH Trägerrate zeitlich zurückgesetzt wird.

4. System nach einem der vorangegangenen Ansprüche, in welchem das Trägerratensignal eine Frequenz in der Größenordnung von 2 MHz hat.

5. System nach einem der vorangegangenen Ansprüche, welches einen Wanderpuffer hat, um das Wandern zu akkommodieren, welches durch separate Zeigereinstellungen verursacht wird, die innerhalb unterschiedlicher Teile des Systems hergestellt werden, durch welches das primäre Ratentaktsignal, das verarbeitet wird, hindurchläuft.

6. System nach Anspruch 5, der einen separaten Wanderpuffer für jedes Signal, das konfiguriert wird, beinhaltet.

7. System nach Anspruch 5 oder 6, das eine Überlaufdetektionseinrichtung beinhaltet, um jeden Frequenzzustand außerhalb der Grenzen in dem Wanderpuffer zu erkennen und zu der normalen Zeigerfunktion zurückzukehren, sollte ein Überlauf auftreten.

8. Verfahren zum Synchronisieren eines SDH Datenübertragungssystems, in welchem das System auf einem primären Ratentakt synchronisiert wird, welcher dann auf eine Trägerrate übersetzt wird, wobei das Verfahren
**gekennzeichnet ist**
durch Synchronisieren von jedem nachfolgenden Gerätestück auf dem Netzwerkweg und durch Ableiten eines Zeitsteuerungssignales von dem Endträger zurück zu der ursprünglichen primären Taktrate und durch Veranlassen der Zeitsteuerung, durch das System auf Transportniveau nicht auf dem virtuellen Behälter-(VC)-Niveau gesendet zu werden, um die Phasengenauigkeit mit der Quelle aufrechtzuerhalten.

9. Verfahren nach Anspruch 8, in welchem es Taktsynchronisation zwischen der Zeitsteuerung des SDH Signales mit der des primären Ratentaktes, der es darin trägt, gibt.

10. Verfahren nach Anspruch 9, in welchem der Ausgang von dem abschließenden SDH Element von einer wiederskalierten Version der SDH Trägerrate zeitlich zurückgesetzt wird.

11. Verfahren nach einem der Ansprüche 8 bis 10, welches angeordnet ist, um eine Frequenz in der Größenordnung von 2 MHz zu betreiben.

12. Verfahren nach einem der Ansprüche 8 bis 11, welches das Liefern eines Wanderpuffers umfaßt, um das Wandern zu akkommodieren, welches durch die Zeigereinstellungen verursacht wird, die innerhalb verschiedener Teile des Systemes hergestellt werden, durch welches das primäre Ratentaktsignal, das verarbeitet wird, hindurchläuft.

13. Verfahren nach Anspruch 12, in welchem separate Wanderpuffer für jedes Signal, das konfiguriert wird, angeordnet werden.

14. Verfahren nach entweder Anspruch 12 oder 13, das das Anordnen einer Überlaufdetektionseinrichtung umfaßt, um jeden Frequenzzustand außerhalb der Grenzen in dem Wanderpuffer zu erkennen, und um zu der normalen Zeigerfunktion zurückzukehren, sollte ein Überlauf auftreten.

## Revendications

1. Système de transmission SDH possèdant un dispositif de synchronisation sur une horloge à fréquence binaire et ayant un dispositif de transformation de fréquence destiné à transformer l'horloge à fréquence binaire en une horloge de support, caractérisé en ce qu'il comporte un dispositif de synchronisation de chaque élément successif d'appareillage du trajet du réseau et un dispositif (37, 36, 39, 32, 30, 24) destiné à dériver, à partir du support final, un signal de synchronisation renvoyé à la fréquence d'horloge primaire originale, et en ce qu'un dispositif est destiné à provoquer la transmission de la synchronisation dans le système au niveau de transport et non au niveau d'un conteneur virtuel (VC) afin que la précision de phase soit conservée avec la source.

2. Système selon la revendication 1, dans lequel un dispositif est destiné à assurer le synchronisme d'horloge entre la synchronisation du signal SDH et l'horloge à fréquence primaire transmise dans ce signal.

3. Système selon la revendication 2, dans lequel il existe un dispositif grâce auquel le signal de sortie de l'élément SDH de terminaison est resynchronisé à partir d'une version de fréquence de support SDH ayant subi un changement d'échelle.

4. Système selon l'une quelconque des revendications précédentes, dans lequel le signal à la fréquence du support à une fréquence de l'ordre de 2 MHz.

5. Système selon l'une quelconque des revendications précédentes, comprenant un circuit tampon de déviation destiné à compenser les déviations provoquées par des ajustements séparés de pointeurs réalisés à l'intérieur de diverses parties du système dans lesquelles circule le signal d'horloge à la fréquence primaire qui est traité.

6. Système selon la revendication 5, comprenant un circuit tampon séparé de déviation pour chaque signal configuré.

7. Système selon la revendication 5 ou 6, comprenant un dispositif de détection de débordement destiné à reconnaître toute condition sortant des limites de fréquence dans le circuit tampon de déviation et à revenir au fonctionnement normal des pointeurs en cas de débordement.

8. Procédé de synchronisation d'un système de transmission de données SDH dans lequel le système est synchronisé sur une horloge à une fréquence primaire qui est transformée en une fréquence du support, le procédé étant caractérisé par la synchronisation de chaque élément successif d'appareillage du trajet du réseau et par la dérivation, à partir de l'organe final de support, d'un signal de synchronisation renvoyé à la fréquence d'horloge primaire originale et provoquant la transmission de la synchronisation dans le système au niveau du transport et non au niveau du conteneur virtuel (VC) afin que la précision de phase soit maintenue avec la source.

9. Procédé selon la revendication 8, dans lequel il existe un synchronisme d'horloge entre la synchronisation du signal SDH et l'horloge à fréquence primaire transportée à l'intérieur de ce signal.

10. Procédé selon la revendication 9, dans lequel le signal de sortie de l'élément SDH de terminaison est resynchronisé à partir d'une version de la fréquence du support SDH ayant subi un changement d'échelle.

11. Procédé selon l'une quelconque des revendications 8 à 10, destiné à fonctionner à une fréquence de l'ordre de 2 MHz.

12. Procédé selon l'une quelconque des revendications 8 à 11, comprenant la réalisation d'un circuit tampon de déviation destiné à compenser la déviation provoquée par des ajustements de pointeur formés dans diverses parties du système dans lequel circule le signal d'horloge à fréquence primaire qui est traité.

13. Procédé selon la revendication 12, dans lequel des circuits tampons séparés de déviation sont incorporés pour chaque signal configuré.

14. Procédé selon la revendication 12 ou 13, comprenant l'incorporation d'un dispositif de détection de débordement destiné à reconnaître toute condition de fréquence en dehors des limites dans le circuit tampon de déviation et à revenir au fonctionnement normal des pointeurs en cas de débordement.
